# EUROPEAN PATENT SPECIFICATION

(11) **EP 4 549 912 B1**
(45) Date of publication and mention of the grant of the patent: **30.09.2026**
(21) Application number: 23207502.8
(22) Date of filing: 02.11.2023
(51) Int. Cl.: G01N 21/45, G01N 21/64, G01N 21/27, G01N 21/47

(54) **METHOD OF DETERMINING A QUANTUM YIELD FROM A SAMPLE BY USING A COMBINED INTERFEROMETRIC SCATTERING AND FLUORESCENCE MICROSCOPE, AND COMBINED INTERFEROMETRIC SCATTERING AND FLUORESCENCE MICROSCOPE**
VERFAHREN ZUR BESTIMMUNG EINER QUANTENAUSBEUTE AUS EINER PROBE UNTER VERWENDUNG EINES KOMBINIERTEN INTERFEROMETRISCHEN STREUUNGS- UND FLUORESZENZMIKROSKOPS, UND KOMBINERTES INTERFEROMETRISCHE STREUUUNGS- UND FLUORESZENZMIKROSKOP
PROCÉDÉ DE DÉTERMINATION D'UN RENDEMENT QUANTIQUE À PARTIR D'UN ÉCHANTILLON À L'AIDE D'UN MICROSCOPE À FLUORESCENCE ET À DIFFUSION INTERFÉROMÉTRIQUE COMBINÉS, ET MICROSCOPE À FLUORESCENCE ET À DIFFUSION INTERFÉROMÉTRIQUE COMBINÉS

(43) Date of publication of application: 07.05.2025
(73) Proprietor: Ludwig-Maximilians-Universität München, 80539 München (DE)
(72) Inventor: Beladi Mousavi, Mohsen, 80539 München (DE); Gruber, Christoph, 80539 München (DE); Cortes, Emiliano, 80539 München (DE); Mancini, Andrea, 80539 München (DE)
(74) Representative: Grünecker Patent- und Rechtsanwälte PartG mbB

(56) References cited:
- DE-A1- 102012 101 744
- US-A1- 2021 381 968
- US-A1- 2022 390 367
- RICHARD W. TAYLOR ET AL: "Interferometric Scattering Microscopy: Seeing Single Nanoparticles and Molecules via Rayleigh Scattering", NANO LETTERS, vol. 19, no. 8, 14 August 2019 (2019-08-14), US, pages 4827 - 4835, XP055641601, ISSN: 1530-6984, DOI: 10.1021/acs.nanolett.9b01822
- PHILIPP KUKURA ET AL: "High-speed nanoscopic tracking of the position and orientation of a single virus", NATURE METHODS, vol. 6, no. 12, 1 December 2009 (2009-12-01), New York, pages 923 - 927, XP055268979, ISSN: 1548-7091, DOI: 10.1038/nmeth.1395
- KRISHNENDU SAHA ET AL: "Gold Nanoparticles in Chemical and Biological Sensing", JOURNAL OF ORGANIC CHEMISTRY, vol. 112, no. 5, 9 May 2012 (2012-05-09), pages 2739 - 2779, XP055220942, DOI: 10.1021/cr2001178
- P ZIJLSTRA ET AL: "Single metal nanoparticles: optical detection, spectroscopy and applications;Single metal nanoparticles", REPORTS ON PROGRESS IN PHYSICS INSTITUTE OF PHYSICS PUBLISHING, BRISTOL, GB, vol. 74, no. 10, 19 September 2011 (2011-09-19), pages 106401, XP020211527, ISSN: 0034-4885, DOI: 10.1088/0034-4885/74/10/106401

## Description

The present invention relates to a method of determining a quantum yield from a sample by using a combined interferometric scattering and fluorescence microscope.

Quantum yield (QY), herein also referred to as quantum efficiency (QE), is a crucial parameter in a wide range of scientific and technological fields. For example, quantum yield measurements are carried out in photonics, biosciences and materials sciences, especially in important growing fields such as photovoltaics and nanotechnology involving quantum dots and nanoparticles. In short, quantum efficiency defines how efficient a system is able to convert absorbed photons or electrons into usable energy such as electrons or emitted photons in the case of luminescent materials. Hence, this parameter is of significant importance for determining the property of a material which is able to absorb and convert photons.

Measuring the quantum efficiency of a macroscopic or bulk sample is a standard procedure in the prior art. For example, for quantum dots or nanoparticles, the quantum yield of colloidal solutions is routinely measured to access the quality of their luminescence properties. In photovoltaics, the quantum efficiency is routinely measured and gives access about the conversion rate of sunlight into electricity. But also in the field of light-emitting diodes (LEDs), it is a standard measure to determine the quantum efficiency which gives information about how much light is obtained as an output for the given electrical input.

Current methods to measure quantum efficiency require extensive sample preparation and/or give only information about the averaged quantum efficiency of a bulk sample. In particular, methods for determining quantum efficiency cannot differentiate or characterize the quantum efficiency of a smaller fraction of the sample, e.g., individual single-particles or specific regions within a sample.

However, quantum yield measurements on such smaller fractions become important for luminescent samples. Photoluminescence quantum yield (PLQY) provides information about how efficient a luminescent material converts absorbed photons into emitted photons. The PLQY value is a detrimental parameter for colloidal nanoparticle samples such as perovskite quantum dots. Here, the PLQY value strongly depends on size, shape, ligand interactions, defect densities and material composition and heterogeneities at a single particle level. So far, the PLQY measurements known in the prior art do not access the above properties as they can only measure the bulk solution of millions to billions of particles and give you the average from them.

To measure PLQY or QY in general from a smaller fraction of a sample, fluorescence measurements that determine the incident and released photons from the sample are combined with auxiliary methods that determine the size of the smaller fraction of the sample to be measured. For example, scanning electron microscopy with photoluminescence microscopy to determine the PLQY of single-particles. Such combined measurements are known in the prior art and have been published in several scientific journals. However, such methods are impractical since they often require complex sample preparation which ultimately alter the properties of the sample measured. Further, these techniques do not allow in operando measurements and to obtain statistical relevant data from the sample measured, which hinder to commercialize said techniques efficiently.

US 2022 / 0 390 367 A1 discloses an optical system for optically imaging a sample including a nanoscale object. The optical system includes an imaging lens, an illumination source configured to provide an excitation light, a detector and a substrate for supporting the sample. A sample interface, arranged to reflect the excitation light, is formed between the sample and a first side of the substrate facing the sample when the sample is applied on the substrate.

Further, the scientific article of Richard W. Taylor et al., "Interferometric Scattering Microscopy: Seeing Single Nanoparticles and Molecules via Rayleigh Scattering", published in Nano Letters, vol. 19, no. 8, 14 August 2019 (2019-08-14), pages 4827-4835, US ISSN: 1530-6984, DOI: 10.1021 /acs.nanolett.9b01822, provides an overview of iSCAT microscopes.

From US 2021/0381968 A1 an iSCAT microscope is known, wherein the iSCAT microscope includes a remote refocusing system adapted to reproduce light collected by a high numerical aperture objective lens using another objective lens and thus can acquire an image of an object in a sample without vertical movement of the objective lens or the sample.

It has not been possible so far to measure routinely the quantum yield of a small fraction of a sample, e.g., the QE of single-particles or a small region within a sample in a fast and convenient manner.

Thus, it is an objective of the present invention to provide a method that addresses the aforementioned issue.

In a first aspect, the invention relates to a method of determining a quantum yield from a sample by using a combined interferometric scattering and fluorescence microscope. The fluorescence microscope comprises an excitation unit to illuminate or to apply an electrical bias to the sample, and a detection channel for fluorescence measurements, and illumination and detection channels for scattering measurements. The method comprises the following steps:
a) calibrating each of the illumination and detection channels for scattering measurements, the excitation unit and the detection channel for fluorescence measurements;
b) performing an interferometric scattering measurement on a sample, thereby obtaining interferometric scattering signals from the sample;
c) illuminating or applying an electrical bias to the sample, thereby obtaining fluorescence signals from the sample; and
d) calculating a quantum yield of the sample based on the interferometric scattering and fluorescence signals.

The basic idea of the present invention is to carry out in a first instance a calibration step which calibrates the illumination and detection channels for scattering measurements, the excitation unit and detection channel for fluorescence measurements such that in step b) and c) the calibrated scattering and fluorescence signals obtained from the aforementioned channels can be directly used to calculate the QY in step d). Here, the inventors have surprisingly found that interferometric scattering microscopy (hereinafter referred to as iSCAT) may be used to determine a QY of sample in combination with fluorescence microscopy.

In principle, interferometric scattering microscopy is a technique which takes advantage of the interference between scattering light from a sample and the directly reflected light from a nearby interface to provide high-contrast, label-free images. In particular, iSCAT allows for real-time observations and can be operated under ambient conditions. The main focus of iSCAT lies in the analysis of single-particle tracking down to the molecule level.

The principle concepts of iSCAT have been published in several scientific journals, for example in "Detection and spectroscopy of gold nanoparticles using supercontinuum white light confocal microscopy", Physical review letters 2004, Volume 93, Number 3, and in "Direct optical sensing of single, unlabeled proteins and superresolution imaging of their binding sites", Nature communications, 5, 4495 (2014). However, it has not been possible so far to measure the quantum yield of single-particles using iSCAT.

In the sense of the invention, iSCAT provides the advantage that the sample can be studied in a native state without altering the sample's properties. Further, since the combined interferometric scattering and fluorescence microscope is already calibrated due to step a), the subsequent measurements can be performed without using auxiliary measurement techniques for every single measurement. In other words, once the microscope is calibrated for a type of a sample to be measured, the subsequent measurement and calculation steps can be applied straightforwardly. Hence, the method according to the invention eliminates the needs of complex sample preparation and overcomes the inability of prior art methods to capture the heterogeneity among individual regions and/or particles of a sample.

The fluorescence signals may either be obtained by illuminating the sample with light, the light having a suitable intensity and wavelength to excite the sample, *i.e.,* to create a fluorescence signal, or by applying an electrical bias to the sample. The second case is also known as electroluminescence. Hence, the excitation unit may comprise a power supply adapted to apply an electrical bias, or an illumination source adapted to illuminate the sample with light. In the case of illuminating the sample, the photoluminescence quantum yield (PLQY) is obtained, whereas in the case of applying an electrical bias, the electroluminescence quantum yield (ELQY) is obtained in step d).

Preferably, the excitation unit comprises the illumination source adapted to illuminate the sample.

Preferably, the measured scattering signal is a contrast value, which is defined by the following equation: $C = \left(\left(I\left(s\right)-I\left(b\right)\right)\times 100\right) / I \left(b\right)$ where C is the contrast in percent, I(b) is the intensity of the background and I(s) is the specimen intensity.

In the sense of the invention, the QY obtained from step d) does not reflect a QY of a larger, i.e., macroscopic or bulk portion of the sample. In particular, the above method allows to measure QY of a portion in the size of 8 - 64.000 nm³., preferably 125 - 8000 nm³. Consequently, calculating the QY of such larger sample portions is excluded from this invention.

According to a first embodiment of the invention, step a) further includes the step of determining a conversion relation between a size correlated parameter and a measured interferometric scattering signal.

By doing so, the measured scattering signal from the sample can be set into relation, i.e., translated into, a physical dimension of the sample (size correlated parameter). In this respect, the term "conversion relation" denotes a module, a table or a mathematical equation to convert the measured interferometric scattering signal into the size correlated parameter of the sample. The use of a conversion relation allows to carry out the calibration of the detection and illumination channel for scattering measurements in a fast and simple manner. Hence, determining the conversion relation "calibrates" the illumination and detection channel for scattering measurements since once the conversion relation is set up for a sample, the scattering signals which are measured from this sample are automatically calibrated and thus can be translated directly into physical dimensions.

According to another embodiment of the invention, the conversion relation is determined from a calibration curve which is obtained by measuring scattering signals of a sample of a known size correlated parameter.

In other words, the calibration curve is obtained by measuring scattering signals of a sample having a known size correlated parameter on the combined interferometric scattering and fluorescence microscope which is later used in step b) for carrying out the actual measurement. This allows a single microscope to carry out the calibration and the subsequent measurement without the need for further equipment and extensive sample preparation, e.g., handling the sample between different microscopes and set-ups. For example, the calibration curve may be linear. It should be noted that the above step only requires the same type of sample, but not exactly the same sample which is used in step b). For example, the same class of material may be used. A further advantage of the above embodiment is that the sample properties are not altered during the scattering measurement. In fact, the sample used for calibration may also be used for the later measurement.

Alternatively, the conversion relation is determined from a simulation based on the refractive index of the sample. A simulation does not require any microscope and is thus independent of environmental influences. Based on the refractive index of the sample, a simulation allows to obtain the required conversion relation in a fast and simple manner. This embodiment is beneficial for a precious sample, which may only be used for the measurement in step b) to avoid damage or contamination of the sample during step a).

The conversion relation may also be obtained from a calibration curve which is obtained by measuring a size correlated parameter of the sample using electron microscopy and scattering signals of the sample by using interferometric scattering measurements. This approach uses both electron microscopy and interferometric scattering measurements to obtain a calibration curve from which the conversion relation can be obtained. Although the above method requires more sample preparation compared to the first two alternatives, the combination of electron microscopy and interferometric scattering microscopy results in a most exact conversion relation since the results from two techniques can be correlated to each other.

Preferably, the conversion relation is determined from a calibration curve which is obtained by measuring scattering signals of a sample having a known size correlated parameter.

According to another embodiment of the invention, the size correlated parameter is selected from the group consisting of sample weight, sample volume and sample density. Preferably, the size correlated parameter is the sample volume. For example, sample volume may be provided in nm³.

According to another embodiment of the invention, between steps b) and d) or during step d), the method further includes the step of converting the scattering signals from the detection channel for scattering measurements by using the conversion relation to obtain a data set of size correlated parameters, in particular, the scattering signals being contrast values.

In other words, the measured scattering signals obtained from step b), e.g., contrast values, can be directly converted by using the conversion relation to yield the data set of size correlated parameters. The so obtained data set can be used for calculating the QY in step d). Hence, the use of the conversion relation allows an easy and fast conversion of the measured signals without extensive reprocessing of the scattering signals.

In another embodiment of the invention, step a) further includes the step of determining a correction factor which accounts for the loss of emitted photons from the sample in the detection channel for fluorescence measurements.

The idea behind the above embodiment is to account for all photons emitted by the samples from the calculation of the QY in step d) which are not arriving at the detector. In principle, there are several losses in the detection channel for fluorescence measurements which are accounted for by the correction factor, for example, the collection efficiency of the objective, the transmission loss of the objective, and losses caused by the beam splitter, lenses and other filters. In addition, the quantum efficiency of the camera can be considered as well. While the losses of most components are provided by the manufacturer, the collection efficiency of the objective have to be determined. One preferred way to measure the collection efficiency of the objective is to measure emission of the sample in question without and with immersion oil under the same excitation conditions.

According to another embodiment, between steps b) and d) or during step d), the method further includes the step of converting the fluorescence signals from the detection channel for fluorescence measurements by using the correction factor to obtain a data set of corrected fluorescence signals. The above method step allows to determine a more accurate fluorescence signal due to the use of the correction factor. Hence, the quantum yield can also be calculated more precisely.

In another embodiment of the present invention, if the sample is illuminated in step a), the method further includes the step of determining an amount of incident photons on the sample in the illumination channel for fluorescence measurements, in particular, the amount of incident photons being obtained for measuring the area of illumination and the illumination profile without the sample at a sample position and considering a calibration factor which accounts for the loss of laser power in the illumination channel for fluorescence measurements.

The above method step allows to precisely determine the amount of photons which arrive from the illumination source onto the sample. Losses typically occur in the illumination path due to the used optics such as the beam splitter or the lenses, the occurrence of stray light, and transmission losses due to the objective.

These losses can be summarized into a single calibration factor which allows to correct the amount of photons arriving at the sample. The calibration factor can be obtained by measuring the initial laser power after the laser output before the optics and the reduced laser power that reaches the sample. Preferably, the calibration factor is measured once before each measurement.

Determining the illumination profile and the area of illumination is of significant importance since they can be used to calculate the amount of incident photons on the detector. Typically, the detector used is a 2D detector such that the amount of photons incident on the sample is given in the unit of photons per pixel. It has been found by the inventors, that the illumination profile together with the illumination area is not homogenous. For example, the illumination profile may follow the shape of a Gaussian distribution. In other words, this means that on the edges less photons hit the sample compared to the middle portion. Thus, taking into account the illumination profile together with the illumination area obtained therefrom, the amount of incident photons on the sample in the illumination channel for fluorescence measurements can be obtained more precisely.

In another embodiment of the invention, in step d), the quantum yield of the sample is calculated by using the data set of corrected fluorescence signals, the data set of size correlated parameters and the amount of incident photons or current applied on the sample.

The combination of the above data and parameters results in the most accurate quantum yield which can be obtained with the combined interferometric scattering and fluorescence microscope. Preferably, the data set of size correlated parameters is used to calculate the absorption cross-section of the sample. For example, the absorption cross-section (σ_{abs}) may be calculated by using the following equation: ${σ}_{abs} = kIm \left(α\right)$ where *k =* 2*π*/*λ* is the light wavevector (*λ* is the wavelength) and *α* is the polarizability. For a deeply subwavelength, i.e., a wavelength below 1000 nm,particle in a homogeneous medium, the polarizability can be approximately calculated as: $α = 3 V \frac{ε - {ε}_{env}}{ε + 2 {ε}_{env}}$ where *V* is the particle volume and *ε*, *εₑₙᵥ* are respectively the dielectric functions of the particle and of the environment.

The obtained absorption cross-section together with the amount of incident photons on the sample give the amount of photons absorbed for the respective sample fraction. Finally, the photoluminescence quantum yield for the sample fraction can be obtained by simply dividing the emitted photons, i.e., data set of corrected fluorescence signals, by the absorbed photons of the sample.

For applying an electrical bias, the following principle as described above may be used. To obtain the ELQY, the emitted photons are divided by the normalized electrical current that is applied.

According to another embodiment of the invention, the sample is selected from the group consisting of single-particles, preferably nanoparticles, more preferably nanoparticles immobilized on a substrate; nanoregions within a film, preferably films with nanometer thickness; nanoregions within a device, preferably a solar cell or a battery; nanoregions within a substrate; and biomolecules, preferably proteins.

In other words, the above mentioned sample fraction is preferably selected from one of the above listed samples.

Preferably, the sample in question are single particles, more preferably, nanoparticles. These individual particles can attach on a substrate which may be held by a substrate holder. Upon attachment, the change in local refractive index allows to detect these single particles via interferometric scattering microscopy. At the same time, the photons that are emitted by the single particles in a different wavelength can be detected by using the illumination and detection channels for fluorescence measurements.

According to another embodiment of the invention, if the sample is illuminated by the excitation unit, during step b), the sample is irradiated with both illumination lights in the illumination channel for fluorescence measurements and in the illumination channel for scattering measurements, the illumination light in the illumination channel for fluorescence measurements having a lower intensity compared to the illumination light in the illumination channel for scattering measurements. This is to increase signal-to-noise ratio in the illumination channel for scattering measurements to avoid sample damage due to absorption at the wavelength used for irradiation. In particular, the illumination light in the illumination channel for scattering measurements is linearly polarized or circularly polarized.

With the above step an accurate fluorescence and scattering measurement can be achieved. Preferably, both fluorescence and scattering measurements are carried out in parallel, i.e., at the same period of time. Hence, the measurement can be carried out in a short amount of time.

If the electrical bias is applied by the excitation unit to the sample, step b) should be carried out before step c).

According to another embodiment of the invention, in steps b) and c), the fluorescence and scattering signals are recorded as image frames, and/or between steps b) and d) or during step d), the method further includes the step of correlating a position of each fluorescence signal and a position of each scattering signal to obtain a correlated image frame with superimposed fluorescence and scattering signals.

The superimposed fluorescence and scattering signals in a single image frame allow to exactly determine the difference in position between the fluorescence and the scattering signals, but also the difference in position between each fluorescence signal and each scattering signal. Thus, the image frame with superimposed fluorescence and scattering signals provides detailed information about foregoing measurements. In detail, these information can be used to correct the obtained measurement data, thereby eliminating measurement errors or accounting for other effects of the measurement.

According to another embodiment, the method further includes the step of sorting out false positive signals by analyzing the correlated image frame with superimposed fluorescence and scattering signals.

Preferably, the analysis comprises the step of determining a distance between superimposed fluorescence and scattering signals wherein, if the determined distance is found to be below or above a predetermined threshold value, the superimposed fluorescence and scattering signals corresponding to the determined distance are discarded in step d).

In other words, the above measurement step allows to sort out false positive signals from the rest of the obtained data. This increases the stability and accuracy of the measurement. Furthermore, by obtaining an image frame with superimposed fluorescence and scattering signals, the analysis can be carried out directly by using the image which makes the handling and interpretation of the data easier compared to handling the pure raw data. This also increases the visualization of the measurement such that an operator can directly see the difference in distance between superimposed scattering and fluorescence signals.

The threshold value can be selected depending on the sample measured. For larger samples, the threshold is larger, whereas compared to smaller samples, the threshold is lower. Also the amount of signals can influence the threshold value. In particular, in the case of many signals, the threshold is larger compared to a low amount of particles.

According to another embodiment of the invention, between steps b) and d), the method further includes the following step:
e) applying an external stimulus to the sample to diminish the fluorescence of a certain region of the sample,
in particular, the method further including the step of repeating a cycle of steps b), c) and e) for a predetermined time or until a predetermined number of cycles are completed.

The reason for the above photo-bleaching step e) is that after a certain measurement time, the substrate may be covered with fluorescing particles that mask the signals of each newly attaching particle. By implementing the above method step e), the fluorescence of the already attached samples can diminished, i.e., "destroyed" in a sense that they do not fluoresce anymore which achieves a pristine environment ready for a new batch of particles to attach on the substrate.

So to say, this mechanism "resets" the measured region and allows to measure signals from newly attaching particles at the same region, which significantly increases the number of particles that can be analyzed. Hence, the statistical accuracy of the measurement is improved. Further, the above method step provides a seamless transition between measurement cycles which eliminates the need for manual intervention.

Preferably, the sample is irradiated with a laser having an intensity which is sufficient to photo bleach a certain region of the sample.

Alternatively, an electrical bias may be applied to the sample which leads to a detachment of samples from the substrate surface or a photo bleach of the substrate.

In particular, the above cycle can be repeated indefinitely.

Preferably, the cycle is performed at least 2 times, more preferably, at least 10 times, even more preferably at least 20 times.

Alternatively, the cycle is performed for at least 10 minutes, more preferably, at least 20 minutes, even more preferably at least 30 minutes.

According to a second aspect of the invention, the invention relates to a combined interferometric scattering and fluorescent microscope, the microscope comprising an excitation unit, the excitation unit comprising an illumination channel for fluorescence measurements with a second illumination source, or a power supply. and the microscope further comprises a detection channel for fluorescence measurements and an illumination and a detection channel for scattering measurements, a sample holder for holding a sample in a sample location, a first illumination source which is assigned to the illumination channel for scattering measurements and configured to provide illuminating light onto the sample holder, a second illumination source which is assigned to the excitation unit and configured to provide illuminating light onto the sample holder, or the power supply which is assigned to the excitation unit and configured to apply electrical bias to the sample holder, a first detector which is assigned to the detection channel for the scattering measurements and configured to receive output light from the sample holder, the output light comprising both light scattering from the sample location and illuminating light from the sample location, and a second detector which is assigned to the detection channel for fluorescence measurements and configured to receive fluorescence light from the sample, and a control and processing unit which is connected to the excitation unit and the detection channel for fluorescence measurements and each of the illumination and detection channels for scattering measurements, wherein the control and processing unit is adapted to perform steps a) to c) according to the first aspect of the invention.

The microscope according to the second aspect of the invention allows to measure a quantum yield of fluorescent particles in a short amount of time without altering the samples' properties. Regarding further advantages, reference is made to the above description of the first aspect which also applies to the second aspect.

In the following, the invention will be described in detail by making reference to the annexed drawings, in which
- Figure 1A is a scheme of a combined interferometric scattering and fluorescence microscope according to the invention, wherein the excitation unit comprises an illumination source;
- Figure 1B is a scheme of a combined interferometric scattering and fluorescence microscope according to the invention, wherein the excitation unit comprises a power supply;
- Figure 2 is a schematic flow diagram which comprises method steps for carrying out a method of determining a quantum yield from a sample by using the combined interferometric scattering and fluorescence microscope from Figure 1;
- Figure 3 is a schematic view on a photo-bleach mechanism, which can be carried out by the method steps from Figure 2; and
- Figure 4 is a schematic side view on the sample substrate arrangement of the microscope from Figure 1B.

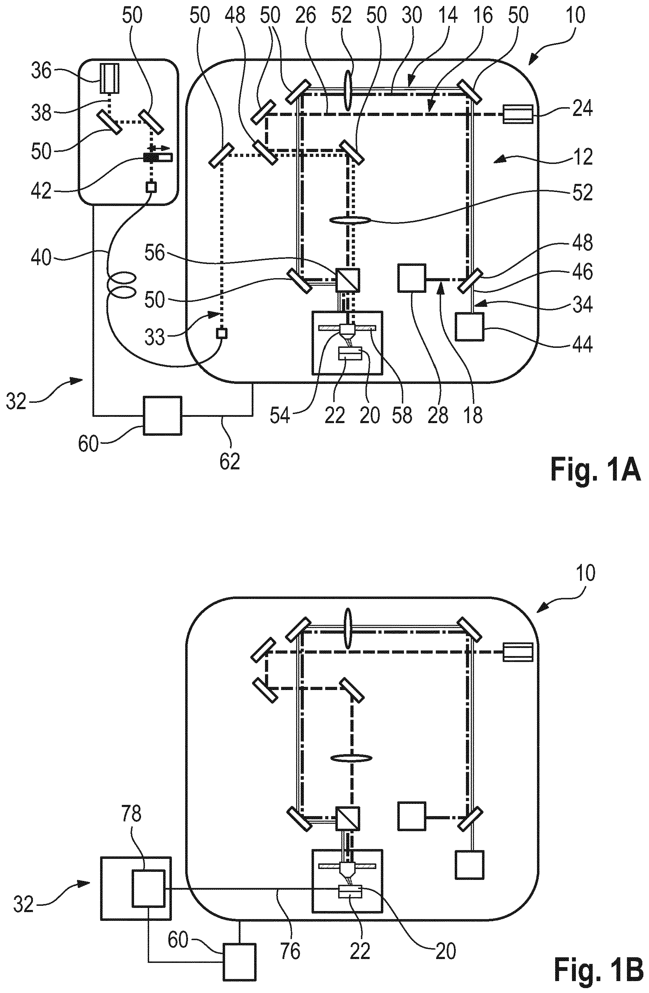

Figure 1A depicts a combined interferometric scattering and fluorescence microscope 10 according to the invention.

The combined interferometric scattering and fluorescence microscope 10 comprises an optical system 12 which provides an optical path 14.

In detail, the optical path 14 comprises an illumination channel for scattering measurements 16 and a detection channel for scattering measurements 18.

The illumination channel for scattering measurements 16 optically connects a sample holder 20 for holding a sample 22 in a sample location with a first illumination source 24 which is configured to provide first illuminating light 26 (scattered light).

For example, the first illuminating light 26 may be a coherent light or a circularly polarized light. In particular, the first illumination source 24 may be a laser. Typically, the wavelength and the intensity of the first illuminating light 26 is selected in dependence of the sample 22 to be imaged. Preferably, the first illuminating light 26 which may be used is ultraviolet light (which may be defined herein as having wavelength in the range from 10 nm to 380 nm); visible light (which may be defined herein as having wavelength in the range from 380 nm to 740 nm); infrared light (which may be defined herein as having wavelength in the range from 740 nm to 300 µm). It is also possible that the first illuminating light 26 may be a mixture of the aforementioned wavelengths.

Further, the detection channel for scattering measurements 18 optically connects the sample holder 20 for holding the sample 22 in a sample location with a first detector 28 which is configured to receive output light 30 (alternating squared scattered line), comprising both light scattering from the sample location (squared line) and illuminating light reflected from the sample location (scattered line), from the sample 22. Hence, the principle of interferometric scattering microscopy is that the scattered light from the objects at or close to the surface of the sample 22 constructively interferes with the reflected light which results in an image of the object captured by the detector 28.

The illuminating light which is reflected from the sample location is predominantly reflected from the interface between the sample holder 20 and the sample 22.

For example, the interface may be a glass-water interface.

In particular, the intensity of the reflected illuminating light may be in the order of 0.5 % of the intensity of the incident light 26. The scattered light is scattered by the objects to be imaged in the sample 22.

The sample 22 may be a liquid sample comprising an object to be imaged.

Objects which can be imaged with the combined interferometric scattering and fluorescence microscope 10 may be selected from the group consisting of single particles, preferably nanoparticles, more preferably nanoparticles immobilized on a substrate; nanoregions within a film, preferably films with nanometer thickness; nanoregions within a device, preferably a solar cell or a battery; nanoregions within a substrate and proteins.

Typically, the sample holder 20 holds the sample 22 on a surface which forms an interface between the sample holder 20 and the sample 22.

The first detector 28 is arranged to receive output light 30 from the sample location. The first detector 28 may be a CMOS detector (complementary metal oxide semiconductor), an image sensor or a CCD (charge-coupled device).

So far, components formally belonging to the interferometric scattering part of the combined interferometric scattering and fluorescence microscope 10 have been described. Next, the components of the fluorescence part of the combined interferometric scattering and fluorescence microscope 10 are described in more detail.

In detail, the optical path 14 comprises an excitation unit 32 and a detection channel for a fluorescence measurement 34. In the embodiment shown in Fig. 1A, the excitation unit 32 is an illumination channel for fluorescence measurements 33 which comprises a second illumination source 36.

The illumination channel for a fluorescence measurement 33 optically connects the second illumination source 36 with the sample holder 20 which holds the sample 22 in a sample location.

In particular, the second illumination source 36 is configured to provide a second illuminating light 38 (dotted line). The second illuminating light 38 may be light with a wavelength suitable to excite the sample 22. Preferably, the second illumination source 36 may be a laser.

In detail, the second illumination source 36 optically couples into a single-mode fiber 40 that directs the second illuminating light 38 from the second illumination source 36 into the illumination channel for scattering measurements 16. However, it may also be that instead of the single-mode fiber 40, a plurality of optical mirrors may be used which direct the second illuminating light 38 into the illumination channel for scattering measurements 16 (not shown here).

In order to alter the intensity of the second illuminating light 38, an ND filter 42 (neutral-density filter) is arranged between the second-mode fiber 40 and the second illumination source 36, the ND filter 42 being controlled by a motor unit (not shown here). The ND filter 42 can be controlled by the motor unit in order to increase or decrease the power intensity of the second illuminating light 38.

Further, the detection channel for a fluorescence measurement 34 optically connects the sample holder 20 for holding the sample 22 in a sample location with a second detector 44 which is configured to receive fluorescence light 46 (double line) from the sample 22.

The fluorescence light 46 is light which is emitted by the sample 22 upon excitation of the sample 22 with the second illuminating light 38.

Typically, the second detector 44 is a CMOS detector, an image sensor or a CCD.

In order to guide the first and second illuminating lights 26, 38 from the first and second illumination sources 24, 36 to the sample location and from the sample location to the first and second detectors 28, 44, respectively, the optical system 12 further includes a plurality of adjustable dichroic mirrors 48, adjustable mirrors 50 and focusing lenses 52.

In particular, the dichroic mirrors 48 are adapted to separate different sorts of light from each other. For example, a dichroic mirror 48 is arranged along the optical path 14 between the detectors 28, 44 in order to split the detection channel for scattering measurements 18 from the detection channel for a fluorescence measurement 34. Another dichroic mirror 48 may be employed to merge the illumination channel for scattering measurements 16 together with the illumination channel for fluorescence measurements 33 upstream of the sample location.

Further, one of the focusing lenses 52 is used as a condenser lens which condenses each of the first and second illuminating lights 26, 38 from the first and second illumination sources 24, 36, respectively, onto the sample 22 and one of the focusing lenses 52 is used as a tube lens which focusses each of the output light 30 and the fluorescence light 46 from the sample 22 and the sample location onto the first and second detectors 28, 44, respectively.

In addition, the optical system 12 includes an objective 54 which is adapted to direct the first and second illuminating lights 26, 38 onto the sample location and to collect the fluorescence light 46 as well as the output light 30 and to direct the fluorescence light 46 and the output light 30 to the first and second detectors 28, 44, respectively.

Further, the optical system 12 comprises a beam splitter 56 which is adapted to separate the first and second illuminating lights 26, 38 from the output light 30 and the fluorescence light 46, respectively, and to guide the output light 30 as well as the fluorescence light 46 via the adjustable mirrors 50 to the first and second detectors 28, 44, respectively, whereas the first and second illuminating lights 26, 38 are guided to the objective 54. Typically, the beam splitter 56 allows partial reflection and partial transmission of the incident light thereon, thereby allowing to split the incident light from the back propagating light into two different optical paths.

For example, the beam splitter 56 may be a plate, typically provided with a film, which may be metallic or dielectric, arranged at 45° angle with respect to the optical path 14. Alternatively, the beam splitter may be a cube splitter formed by a plurality of prisms having a partially reflecting film at the interface between the prisms.

Further, the combined interferometric and fluorescence microscope 10 comprises a stage unit 58 which is adapted to adjust the focus of the objective 54.

In particular, the stage unit 58 is adapted to vary the distance between the objective 54 and the sample 22, thereby adjusting the focus.

The combined interferometric scattering and fluorescence microscope 10 is connected to a control and processing unit 60 via a connection 62. In particular, the connection 62 may be a wire, however, also a wireless connection may be possible.

The control and processing unit 60 is connected to each of the illumination and detection channels 16, 18, 33, 34 and is adapted to perform a method of determining a quantum yield from a sample 22 by using the combined interferometric scattering and fluorescence microscope 10.

Fig. 1B displays an embodiment of the combined interferometric scattering and fluorescence microscope 10 in which the excitation unit 32 is not an illumination channel for fluorescence measurements 33, but a power supply 78. The remaining features are not changed and are included herein by reference to the above description.

The power supply 78 is connected to the sample holder 20 via an electrical connection 76, e.g., a conducting wire or the like. In particular, the power supply 78 is adapted to apply an electrical bias such as a current to the sample 22. The electrical bias should be sufficient to excite the sample 22 and to create electro-fluorescence signals from the sample 22.

A suitable power supply 78 may be a potentiostat.

The power supply 78 is connected to the control and processing unit 60, which is further connected to each of the illumination and detection channels 16, 18, 34 and is adapted to perform a method of determining a quantum yield from a sample 22 by using the combined interferometric scattering and fluorescence microscope 10.

Next, the method of determining the quantum yield of a sample will be described in more detail with regard to the embodiment of the microscope as shown in Fig. 1A.

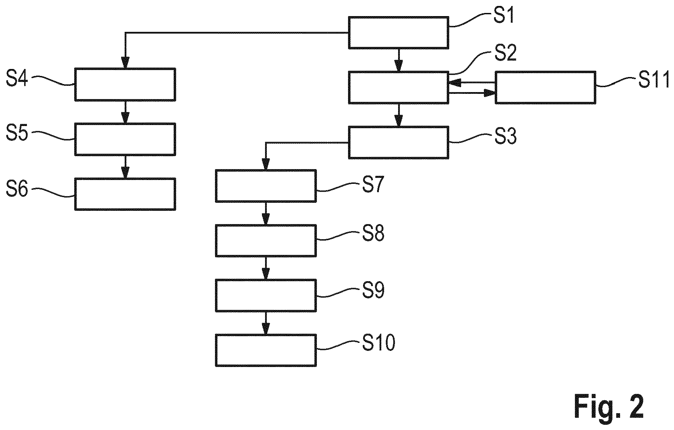

A schematic overview over the steps belonging to the method of determining a quantum yield from a sample is provided in Figure 2 which will be described in the following.

In a first step S1, each of the illumination and detection channels 16, 18, 33, 34 is calibrated.

In a next step S2, fluorescence and interferometric scattering measurements are performed on a sample, thereby obtaining interferometric scattering and fluorescence signals.

Subsequently, a quantum yield of the sample based on the interferometric scattering and fluorescence signals is calculated in step S3.

In the following, each of the prior described steps S1 to S3 is described in more detail.

First, step S1 is described in more detail.

Step S1 may further include at least one of steps S4 to S6.

In step S4, a conversion relation between a size correlated parameter and the measured interferometric scattering signal is determined. For example, a measured interferometric scattering signal from the sample such as a contrast value can be converted by the conversion relation to a size correlated parameter such as a volume of the sample. The conversion relation may be a table, a mathematical equation or a theoretical module which correlates the size correlated parameter to an interferometric scattering signal. In other words, the interferometric scattering signal which is measured during the calibration step in the interferometric scattering and fluorescence microscope is calibrated to a specific size correlated parameter, e.g., cubic nanometers of the sample.

In particular, the conversion relation may be determined from the calibration curve which is obtained by measuring scattering signals of a sample having a known size correlated parameter or from a simulation based on a refraction index of the sample, or from a calibration curve which is obtained by measuring a size correlated parameter of the sample using electron microscopy and scattering signals of the sample by using interferometric scattering measurements.

Preferably, the size correlated parameter is selected from the group consisting of sample weight, sample volume and sample density.

Further, in step S5, a correction factor that accounts for the loss of emitted photons from the sample in the direction channel for fluorescence measurements is determined.

The correction factor may comprise at least one of the following subfactors such as the collection efficiency of the objective, transmission loss objective, optics in the detection path, lenses, filters and the quantum efficiency of the camera.

For example, the collection efficiency of the objective may be determined by measuring the emission of the sample in question without and with immersion oil on top at the same excitation conditions in order to calculate the collection efficiency of the used oil immersion objective. The collection efficiency and the aforementioned subfactors are combined into one calibration factor.

In a further step S6 an amount of incident photons on a sample in the illumination channel for fluorescence measurements is determined.

Step S6 may include the step of determining the amount of incident photons from measuring the area of illumination and the illumination profile without the sample at the sample position and considering a calibration factor which accounts for the loss of laser power in the illumination channel for fluorescence measurements.

It should be noted that the above-mentioned method steps S4 to S6 do not have to be carried out one after the other, rather, the steps may be mixed and hence, the order is arbitrary.

In the following, a closer look is taken on method step S2.

During step S2, the sample may be irradiated with both illumination lights in the illumination channel for fluorescence measurements and in the illumination channel for scattering measurements, the illumination light in the illumination channel for fluorescence measurements having a lower intensity compared to the illumination light in the illumination channel for scattering measurements.

In particular, the illumination light in the illumination channel for scattering measurements is linearly polarized or circularly polarized.

In principle, it is possible to illuminate the sample at the same time via both illumination channels.

In the following, step S3 is discussed in more detail. Step S3 may comprise at least one of steps S7 to S10.

In S7 the scattering signals from the detection channel for scattering measurements is converted by using the conversion relation to obtain a data set of size correlated parameters. In particular, the scattering signals are contrast values. However, this specific step may also be carried out between steps S2 and S3.

Step S8 includes to convert the fluorescence signals from the detection channel for fluorescence measurements by using the correction factor to obtain a data set of corrected fluorescence signals. This step may also be carried out between steps S2 and S3.

In step S8, the fluorescence and scattering signals may be transformed or recorded as image frames. This step is carried out during step S2.

Further, between steps S2 and S3 or during step S3, the method further includes step S9 of correlating a position of each fluorescence signal and a position of each scattering signal to obtain a correlated image frame with superimposed fluorescence and scattering signals.

In addition, step S9 may comprise at least one of the following steps:
- performing a background correction, preferably a ratiometric background correction;
- localizing the position of a smaller fraction of the sample, particularly the position of particles or regions within the sample, from the measured scattering signals;
- processing the scattering signals to extract the measured amplitudes as well as spatial and temporal positions for each smaller fraction of the sample;
- rescaling of the obtained superimposed fluorescence and scattering image frame to the same pixel size and interpolating to the same image amount, optionally taking different exposure times and different amounts of images into account;
- excluding all detaching particles from interferometric scattering data and particles extremely close in time and position;
- taking into account possible offsets between scattering signals and fluorescence signals;
- subtracting the background of the fluorescent images with the illumination profile;
- converting the grey levels into detected photons;
- integrating with a right angular or a circular area to calculate the number of photons from the pixel.

Afterwards, an additional step S10 can be carried out, which includes sorting out false positive signals by determining a distance between superimposed fluorescence and scattering signals, wherein, if the determined distance is found to be below or above a predetermined threshold value, the superimposed fluorescence and scattering signals corresponding to the determined distance are discarded in step S3.

In addition, step S10 may comprise at least one of the following steps:
- discarding temporarily same frames if the offset is too large;
- discarding spatially same positions of images if the offset is too big;
- averaging signals by of rolling average spatial and temporal region linearly, wherein an angular coefficient shows the attaching particle at the space and point in time;
- discarding a smaller fraction of the sample, particularly particles, which overlap with another smaller fraction of the sample, particularly particles, for example if the distance in-between is too close;
- averaging signals wherein the average signal has to be over a specific threshold wherein, if the signal is below the threshold, the specific signal is discarded;
- discarding a free smaller fraction of the sample, particularly particles, from the beginning;
- taking into account a certain minimum threshold number of images, which discards a smaller fraction of the sample, particularly particles, which attach at the end of the measurement;

It should be noted that the above-mentioned method steps S7 to S10 do not have to be carried out one after the other, rather, the steps may be mixed and hence, the order is arbitrary.

In detail, step S3 may also comprise at least one of the following steps:
- converting measured scattering signals to size correlated parameters using the conversion relation;
- converting the size correlated parameter to an absorption cross-section by using the refractive index of the material and the classical formula as described above.
- calculating the absorbed photons of the sample by using the absorption cross-section and the calibrated incident photons per area;
- calculating the quantum yield of the sample by using the absorbed photons of the sample and the data set of corrected fluorescent signals.

Preferably, the quantum yield of the sample in step S3 is calculated by using the data set of corrected fluorescence signals, the data set of size correlated parameters and the amount of incident photons on a sample.

More preferably, the sample is selected from the group consisting of single particles, preferably nanoparticles, more preferably nanoparticles immobilized on a substrate; nanoregions within a film, preferably films with a nanometer thickness; nanoregions within a device, preferably a solar cell or a battery, nanoregions within a substrate, and proteins.

In addition, a further step S11 may be carried out in which an external stimulus is provided to diminish the fluorescence of the sample. In a preferred embodiment, the sample is irradiated with a laser having an intensity which is sufficient to photo-bleach a certain region of the sample. However, it is also possible to use an electrical bias which leads to a detachment of the sample from the surface of the substrate. This step may be carried out after step S2.

In particular, the method further includes the step of repeating a cycle of steps S2 and S11 for a predetermined time or until a predetermined number of cycles are completed.

In detail, step S11 allows to photo-bleach a certain region of the sample which results in a clear substrate free of fluorescence samples. Hence, a new sample can attach to the surface and be measured.

The above steps S1 to S11 can also be carried out by the microscope 10 shown in Fig. 1B, with the difference that, instead of illuminating the sample, an electrical bias is applied to the sample. Further, the steps regarding the calibration of the illumination channel for fluorescence measurements are disregarded since the amount of charges applied to the sample is known by the power supply used. Preferably, the power supply is coupled to a computer, which in combination allows to precisely determine the amount of charges, i.e., current which are induced into the sample.

In contrast to the method described above in steps S1 to S11, it is preferred that the electrical bias is applied after the scattering measurements are carried out.

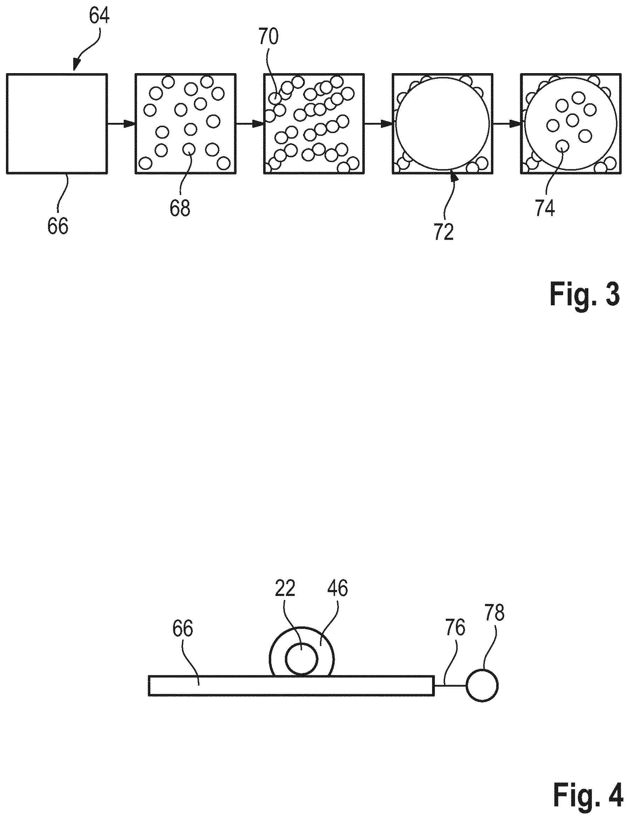

Details of measuring electroluminescence are provided in Fig. 4 which is described later.

This principle of step S11 is in detail explained in Figure 3.

In the beginning of the photo-bleach process S11, a region of a sample 64 which is located on a substrate 66 is provided with no sample material attached to it. After a certain amount of time, an amount of sample attaches to the substrate 66, which result in sample signal 68 from the sample 64.

However, after an additional period of time, more sample attaches to the substrate 66 which results in additional sample signal 70 from the newly attached sample. Now, the signals 68, 70 between the different samples interfere with each other. In worst case, the signals 68, 70 partially or completely overlap with each other. To avoid this overlap, the photo-bleach step S11 may be carried out after an amount of time.

By doing so, a certain region of the sample 72 may be photo-bleached which means that the fluorescence of the sample being so far attached to the substrate 66 is destroyed. In other words, this process diminishes the fluorescence signals from the sample attached to the surface of the substrate 66.

After a certain amount of time, new fluorescence sample 74 signals appear on the substrate 66 due to the attachment of new sample and an additional fluorescent measurement may be carried out.

In principle, the sequence of steps S11 and S2 may be repeated indefinitely.

Figure 4 shows a side view of the sample 22 and substrate 66 arrangement from the microscope given in Fig. 1B.

The sample 22 is reversibly or irreversibly attached to the substrate 66 which is conductive or coated with a conductive top layer facing the sample 22.

Further, the substrate 66 is electrically connected to the power supply 78 via an electrical connection 76. By applying an electrical bias to the substrate 66, the sample 22 attached thereto is excited and irradiates fluorescence light 46 which is coupled into the detection channel 34 for fluorescence measurements.

## Claims

1. A method of determining a quantum yield from a sample (22) by using a combined interferometric scattering and fluorescence microscope (10), the microscope comprising an excitation unit (32) to illuminate or to apply an electrical bias to the sample, and a detection channel (34) for fluorescence measurements, and illumination and detection channels for scattering measurements (16, 18), wherein the method comprises the following steps:
a) calibrating each of the illumination and detection channels for scattering measurements (16, 18), the excitation unit (32) and the detection channel (34) for fluorescence measurements ;
b) performing an interferometric scattering measurement on the sample (22), thereby obtaining interferometric scattering signals from the sample (22);
c) illuminating or applying an electrical bias to the sample, thereby obtaining fluorescence signals from the sample (22); and
d) calculating a quantum yield of the sample (22) based on the interferometric scattering and fluorescence signals.

2. The method of determining a quantum yield according to claim 1, wherein step a) further includes the step of determining a conversion relation between a size correlated parameter and a measured interferometric scattering signal.

3. The method of determining a quantum yield according to claim 2, wherein the conversion relation is determined from a calibration curve which is obtained by measuring scattering signals of a sample having a known size correlated parameter, or from a simulation based on the refractive index of the sample, or from a calibration curve which is obtained by measuring a size correlated parameter of the sample using electron microscopy and scattering signals of the sample by using interferometric scattering measurements.

4. The method of determining a quantum yield according to claim 2 or 3, wherein the size correlated parameter is selected from the group consisting of sample weight, sample volume, and sample density.

5. The method of determining a quantum yield according to any one of claims 2 to 4, wherein between steps b) and d) or during step d) the method further includes the step of converting the scattering signals from the detection channel for scattering measurements by using the conversion relation to obtain a data set of size correlated parameters, in particular, the scattering signals being contrast values.

6. The method of determining a quantum yield according to any one of the preceding claims, wherein step a) further includes the step of determining a correction factor which accounts for the loss of emitted photons from the sample (22) in the detection channel for fluorescence measurements (34).

7. The method of determining a quantum yield according to claim 6, wherein between steps b) and d) or during step d) the method further includes the step of converting the fluorescence signals from the detection channel for fluorescence measurements by using the correction factor to obtain a data set of corrected fluorescence signals.

8. The method of determining a quantum yield according to any one of the preceding claims, wherein, if the sample (22) is illuminated instep a), the method further includes the step of determining an amount of incident photons on the sample (22) in the illumination channel for fluorescence measurements (32),
in particular, the amount of incident photons being obtained from measuring the area of illumination and the illumination profile without the sample at a sample position and considering a calibration factor which accounts for the loss of laser power in the illumination channel for fluorescence measurements (32).

9. The method of determining a quantum yield according to claims 5, 7 and 8, wherein in step d) the quantum yield of the sample is calculated by using the data set of corrected fluorescence signals, the data set of size correlated parameters and the amount of incident photons or current applied on the sample (22).

10. The method of determining a quantum yield according to any one of the preceding claims, wherein the sample is selected from the group consisting of single particles, preferably nanoparticles, more preferably nanoparticles immobilized on a substrate; nanoregions within a film, preferably films with nanometer thickness; nanoregions within a device, preferably a solar cell or a battery; nanoregions within a substrate; and biomolecules, preferably proteins.

11. The method of determining a quantum yield according to any one of the preceding claims, wherein, if the sample (22) is illuminated by the excitation unit (32), during step b) the sample (22) is irradiated with both illumination light (26, 38) in the illumination channel for fluorescence measurements (32) and in the illumination channel for scattering measurements (16), the illumination light (38) in the illumination channel for fluorescence measurements (32) having a lower intensity compared to the illumination light (26) in the illumination channel for scattering measurements (16),
in particular, the illumination light (26) in the illumination channel for scattering measurements (16) being linearly polarized or circularly polarized, and/or
wherein, if the electrical bias is applied by the excitation unit (32) to the sample (22), step b) is carried out before step c).

12. The method of determining a quantum yield according to any one of the preceding claims, wherein in step b) and c) the fluorescence and scattering signals are recorded as image frames, and/or
wherein between steps b) and d) or during step d) the method further includes the step of correlating a position of each fluorescence signal and a position of each scattering signal to obtain a correlated image frame with superimposed fluorescence and scattering signals.

13. The method of determining a quantum yield according to claim 12, wherein the method further includes the step of sorting out false positive signals by analyzing the correlated image frame with superimposed fluorescence and scattering signals, preferably by determining a distance between superimposed fluorescence and scattering signals, wherein, if the determined distance is found to be below or above a predetermined threshold value, the superimposed fluorescence and scattering signals corresponding to the determined distance are discarded in step d).

14. The method of determining a quantum yield according to any one of the preceding claims, wherein between steps b) and d) the method further includes the following step:
e) applying an external stimulus to the sample (22) to diminish the fluorescence of a certain region of the sample (64),
in particular, the method further including the step of repeating a cycle of steps b), c) and e) for a predetermined time or until a predetermined number of cycles are completed.

15. A combined interferometric scattering and fluorescence microscope (10), comprising
an excitation unit (32), the excitation unit (32) comprising an illumination channel for fluorescence measurements (33) with a second illumination source (36), or a power supply (78),
a detection channel for fluorescence measurements (34) and illumination and detection channels for scattering measurements (16, 18),
a sample holder (20) for holding a sample (22) in a sample location,
a first illumination source (24) which is assigned to the illumination channel for scattering measurements (16) and configured to provide illuminating light (26) onto the sample holder (20),
a second illumination source (36) which is assigned to the excitation unit (32) and configured to provide illuminating light (38) onto the sample holder (20), or the power supply (78) which is assigned to the excitation unit (32) and configured to apply electrical bias to the sample holder (20),
a first detector (28) which is assigned to the detection channel for scattering measurements (18) and configured to receive output light (30) from the sample holder (20), the output light (30) comprising both light scattering from the sample location and illuminating light reflected from the sample location; and
a second detector (44) which is assigned to the detection channel for fluorescence measurements (34) and configured to receive a fluorescence light (46) from the sample (22),
and a control and processing unit (60) which is connected to the excitation unit (32) and the detection channel for fluorescence measurements (34) and each of the illumination and detection channels for scattering measurements (16, 18),
wherein the control and processing unit (60) is adapted to perform steps a) - d) of claim 1.

## Patentansprüche

1. Verfahren des Bestimmens einer Quantenausbeute einer Probe (22) durch Verwenden eines kombinierten interferometrischen Streuungs- und Fluoreszenzmikroskops (10), wobei das Mikroskop eine Anregungseinheit (32) zum Beleuchten oder zum Anlegen einer elektrischen Vorspannung an die Probe und einen Detektionskanal (34) für Fluoreszenzmessungen und Beleuchtungs- und Detektionskanäle für Streumessungen (16, 18) umfasst, wobei das Verfahren die folgenden Schritte umfasst:
a) Kalibrieren jedes der Beleuchtungs- und Detektionskanäle für Streumessungen (16, 18), der Anregungseinheit (32) und des Detektionskanals (34) für Fluoreszenzmessungen;
b) Durchführen einer interferometrischen Streumessung an der Probe (22), dadurch Gewinnen von interferometrischen Streusignalen von der Probe (22);
c) Beleuchten oder Anlegen einer elektrischen Vorspannung an die Probe, dadurch Gewinnen von Fluoreszenzsignalen von der Probe (22); und
d) Berechnen einer Quantenausbeute der Probe (22) auf der Grundlage der interferometrischen Streu- und Fluoreszenzsignale.

2. Verfahren des Bestimmens einer Quantenausbeute gemäß Anspruch 1, wobei Schritt a) ferner den Schritt des Festlegens einer Umrechnungsbeziehung zwischen einem größenkorrelierten Parameter und einem gemessenen interferometrischen Streusignal beinhaltet.

3. Verfahren des Bestimmens einer Quantenausbeute gemäß Anspruch 2, wobei die Umrechnungsbeziehung aus einer Kalibrierungskurve festgelegt wird, welche durch Messen von Streusignalen einer Probe mit einem bekannten größenkorrelierten Parameter erhalten wird, oder aus einer Simulation auf der Grundlage des Brechungsindexes der Probe, oder aus einer Kalibrierungskurve, die durch Messen eines größenkorrelierten Parameters der Probe mittels Elektronenmikroskopie und von Streusignalen der Probe mittels interferometrischer Streumessungen erhalten wird.

4. Verfahren des Bestimmens einer Quantenausbeute gemäß Anspruch 2 oder 3, wobei der größenkorrelierte Parameter aus der Gruppe, die aus Probengewicht, Probenvolumen und Probendichte besteht, ausgewählt wird.

5. Verfahren des Bestimmens einer Quantenausbeute gemäß einem der Ansprüche 2 bis 4, wobei das Verfahren zwischen den Schritten b) und d) oder während des Schritts d) ferner den Schritt des Umwandelns der Streusignale aus dem Detektionskanal für Streumessungen unter Verwendung der Umrechnungsbeziehung beinhaltet, um einen Datensatz von größenkorrelierten Parametern zu erhalten, wobei die Streusignale insbesondere Kontrastwerte sind.

6. Verfahren des Bestimmens einer Quantenausbeute gemäß einem der vorstehenden Ansprüche, wobei Schritt a) ferner den Schritt des Bestimmens eines Korrekturfaktors beinhaltet, welcher den Verlust emittierter Photonen aus der Probe (22) im Detektionskanal für Fluoreszenzmessungen (34) berücksichtigt.

7. Verfahren des Bestimmens einer Quantenausbeute gemäß Anspruch 6, wobei das Verfahren zwischen den Schritten b) und d) oder während des Schritts d) ferner den Schritt des Umwandelns der Fluoreszenzsignale aus dem Detektionskanal für Fluoreszenzmessungen unter Verwendung des Korrekturfaktors beinhaltet, um einen Datensatz korrigierter Fluoreszenzsignale zu erhalten.

8. Verfahren des Bestimmens einer Quantenausbeute gemäß einem der vorstehenden Ansprüche, wobei, wenn die Probe (22) in Schritt a) beleuchtet wird, das Verfahren ferner den Schritt des Bestimmens einer Menge von auf die Probe (22) einfallenden Photonen im Beleuchtungskanal für Fluoreszenzmessungen (32) beinhaltet,
wobei insbesondere die Menge der einfallenden Photonen durch Messen der Beleuchtungsfläche und des Beleuchtungsprofils ohne Probe an einer Probenposition und Beachten eines Kalibrierungsfaktors, der den Verlust von Laserleistung im Beleuchtungskanal für Fluoreszenzmessungen (32) berücksichtigt, erhalten wird.

9. Verfahren des Bestimmens einer Quantenausbeute gemäß den Ansprüchen 5, 7 und 8, wobei in Schritt d) die Quantenausbeute der Probe unter Verwendung des Datensatzes korrigierter Fluoreszenzsignale, des Datensatzes größenkorrelierter Parameter und der Menge von einfallenden Photonen oder von an die Probe (22) angelegtem Strom berechnet wird.

10. Verfahren des Bestimmens einer Quantenausbeute gemäß einem der vorstehenden Ansprüche, wobei die Probe aus der aus Einzelpartikeln bestehenden Gruppe ausgewählt ist, vorzugsweise Nanopartikeln, bevorzugter auf einem Substrat immobilisierten Nanopartikeln, Nanobereichen innerhalb eines Films, vorzugsweise Filmen mit einer Dicke im Nanometerbereich, Nanobereichen innerhalb einer Vorrichtung, vorzugsweise einer Solarzelle oder einer Batterie, Nanobereichen innerhalb eines Substrats; und Biomolekülen, vorzugsweise Proteinen.

11. Verfahren des Bestimmens einer Quantenausbeute gemäß einem der vorstehenden Ansprüche, wobei, wenn die Probe (22) durch die Anregungseinheit (32) beleuchtet wird, die Probe (22) während des Schritts b) mit beiden Beleuchtungsleuchten (26, 38) im Beleuchtungskanal für Fluoreszenzmessungen (32) und im Beleuchtungskanal für Streumessungen (16) bestrahlt wird, wobei das Beleuchtungslicht (38) im Beleuchtungskanal für Fluoreszenzmessungen (32) eine geringere Intensität verglichen mit dem Beleuchtungslicht (26) im Beleuchtungskanal für Streumessungen (16) aufweist,
wobei insbesondere das Beleuchtungslicht (26) im Beleuchtungskanal für Streumessungen (16) linear polarisiert oder zirkular polarisiert ist und/oder
wobei, wenn die elektrische Vorspannung durch die Anregungseinheit (32) an die Probe (22) angelegt wird, Schritt b) vor Schritt c) ausgeführt wird.

12. Verfahren des Bestimmens einer Quantenausbeute gemäß einem der vorstehenden Ansprüche, wobei in den Schritten b) und c) die Fluoreszenz- und Streusignale als Einzelbilder aufgezeichnet werden, und/oder
wobei zwischen den Schritten b) und d) oder während des Schritts d) das Verfahren ferner den Schritt des Korrelierens einer Position jedes Fluoreszenzsignals und einer Position jedes Streusignals beinhaltet, um ein korreliertes Einzelbild mit überlagerten Fluoreszenz- und Streusignalen zu erhalten.

13. Verfahren des Bestimmens einer Quantenausbeute gemäß Anspruch 12, wobei das Verfahren ferner den Schritt des Aussortierens von falsch-positiven Signalen durch Analyse des korrelierten Bildrahmens mit überlagerten Fluoreszenz- und Streusignalen beinhaltet, vorzugsweise durch Bestimmung eines Abstands zwischen überlagerten Fluoreszenz- und Streusignalen, wobei, falls der bestimmte Abstand unterhalb oder oberhalb eines vorgegebenen Schwellenwerts liegt, die dem bestimmten Abstand entsprechenden überlagerten Fluoreszenz- und Streusignale in Schritt d) verworfen werden.

14. Verfahren des Bestimmens einer Quantenausbeute gemäß einem der vorstehenden Ansprüche, wobei das Verfahren zwischen den Schritten b) und d) ferner den folgenden Schritt beinhaltet:
e) Anlegen eines externen Stimulus an die Probe (22), um Fluoreszenz eines bestimmten Bereichs der Probe (64) zu reduzieren,
wobei das Verfahren insbesondere ferner den Schritt des Wiederholens eines Zyklus der Schritte b), c) und e) für eine vorbestimmte Zeit oder bis eine vorbestimmte Anzahl von Zyklen abgeschlossen ist, beinhaltet.

15. Kombiniertes interferometrisches Streuungs- und Fluoreszenzmikroskop (10), umfassend:
eine Anregungseinheit (32), wobei die Anregungseinheit (32) einen Beleuchtungskanal für Fluoreszenzmessungen (33) mit einer zweiten Beleuchtungsquelle (36) oder einer Stromversorgung (78) umfasst,
einen Detektionskanal für Fluoreszenzmessungen (34) und Beleuchtungs- und Detektionskanäle für Streumessungen (16, 18),
einen Probenhalter (20) zum Halten einer Probe (22) an einer Probenposition,
eine erste Beleuchtungsquelle (24), die dem Beleuchtungskanal für Streumessungen (16) zugeordnet und so ausgelegt ist, dass sie Beleuchtungslicht (26) auf den Probenhalter (20) bereitstellt,
eine zweite Beleuchtungsquelle (36), die der Anregungseinheit (32) zugeordnet und so ausgelegt ist, dass sie Beleuchtungslicht (38) auf den Probenhalter (20) bereitstellt, oder die Stromversorgung (78), die der Anregungseinheit (32) zugeordnet und so ausgelegt ist, dass sie eine elektrische Vorspannung an den Probenhalter (20) anlegt,
einen ersten Detektor (28), der dem Detektionskanal für Streumessungen (18) zugeordnet und so konfiguriert ist, dass er Ausgangslicht (30) vom Probenhalter (20) empfängt, wobei das Ausgangslicht (30) sowohl Licht, das sich vom Probenort zerstreut, als auch vom Probenort reflektiertes Beleuchtungslicht umfasst, und
einen zweiten Detektor (44), der dem Detektionskanal für Fluoreszenzmessungen (34) zugeordnet ist und so konfiguriert ist, dass er Fluoreszenzlicht (46) von der Probe (22) empfängt,
und eine Steuer- und Verarbeitungseinheit (60), die mit der Anregungseinheit (32) und dem Detektionskanal für Fluoreszenzmessungen (34) sowie mit jedem der Beleuchtungs- und Detektionskanäle für Streumessungen (16, 18) verbunden ist,
wobei die Steuer- und Verarbeitungseinheit (60) dazu ausgelegt ist, Schritte a) bis d) nach Anspruch 1 auszuführen.

## Revendications

1. Procédé de détermination d'un rendement quantique à partir d'un échantillon (22) en utilisant un microscope combinant fluorescence et dispersion interférométrique (10), le microscope comprenant une unité d'excitation (32) pour illuminer l'échantillon ou lui appliquer une polarisation électrique, et un canal de détection (34) pour des mesures de fluorescence, et des canaux de détection et d'illumination pour des mesures de dispersion (16, 18), dans lequel le procédé comprend les étapes suivantes :
a) un étalonnage de chacun des canaux d'illumination et de détection pour mesures de dispersion (16, 18), l'unité d'excitation (32) et le canal de détection (34) pour mesures de fluorescence ;
b) une exécution d'une mesure de dispersion interférométrique sur l'échantillon (22), obtenant ainsi des signaux de dispersion interférométrique issus de l'échantillon (22) ;
c) une illumination ou une application d'une polarisation électrique à l'échantillon, obtenant ainsi des signaux de fluorescence issus de l'échantillon (22) ; et
d) un calcul d'un rendement quantique de l'échantillon (22) reposant sur les signaux de dispersion interférométrique et de fluorescence.

2. Le procédé de détermination d'un rendement quantique selon la revendication 1, dans lequel une étape a) inclut en outre l'étape de détermination d'une relation de conversion entre un paramètre corrélé de taille et un signal de dispersion interférométrique mesuré.

3. Le procédé de détermination d'un rendement quantique selon la revendication 2, dans lequel la relation de conversion est déterminée à partir d'une courbe d'étalonnage qui est obtenue en mesurant des signaux de dispersion d'un échantillon présentant un paramètre corrélé de taille connu, ou à partir d'une simulation reposant sur l'indice de réfraction de l'échantillon, ou à partir d'une courbe d'étalonnage qui est obtenue en mesurant un paramètre corrélé de taille de l'échantillon en utilisant une microscopie électronique et des signaux de dispersion de l'échantillon au moyen de mesure de dispersion interférométrique.

4. Le procédé de détermination d'un rendement quantique selon la revendication 2 ou 3, dans lequel le paramètre corrélé de taille est sélectionné à partir du groupe consistant en un poids d'échantillon, un volume d'échantillon et une densité d'échantillon.

5. Le procédé de détermination d'un rendement quantique selon l'une quelconque des revendications 2 à 4, dans lequel entre les étapes b) et d) ou au cours de l'étape d) le procédé inclut en outre l'étape de conversion des signaux de dispersion issus du canal de détection pour mesures de dispersion en utilisant la relation de conversion pour obtenir un ensemble de données de paramètres corrélés de taille, en particulier, les signaux de dispersion constituant des valeurs de contraste.

6. Le procédé de détermination d'un rendement quantique selon l'une quelconque des revendications précédentes, dans lequel l'étape a) inclut en outre l'étape de détermination d'un facteur de correction qui tient compte de la perte de photons émis à partir de l'échantillon (22) dans le canal de détection pour mesures de fluorescence (34).

7. Le procédé de détermination d'un rendement quantique selon la revendication 6, dans lequel entre des étapes b) et d) ou au cours de l'étape d) le procédé inclut en outre l'étape de conversion des signaux de fluorescence issus du canal de détection pour mesures de fluorescence en utilisant le facteur de correction pour obtenir un ensemble de données de signaux de fluorescence corrigés.

8. Le procédé de détermination d'un rendement quantique selon l'une quelconque des revendications précédentes, dans lequel, si l'échantillon (22) est illuminé à l'étape a), le procédé inclut en outre l'étape de détermination d'une quantité de photons incidents sur l'échantillon (22) dans le canal d'illumination pour mesures de fluorescence (32),
en particulier, la quantité de photons incidents étant obtenue à partir d'une mesure de la zone d'illumination et du profil d'illumination sans l'échantillon sur une position d'échantillon et compte tenu d'un facteur d'étalonnage qui tient compte de la perte de puissance de laser dans le canal d'illumination pour mesures de fluorescence (32).

9. Le procédé de détermination d'un rendement quantique selon les revendications 5, 7 et 8, dans lequel à l'étape d) le rendement quantique de l'échantillon est calculé en utilisant le jeu de données de signaux de fluorescence corrigés, le jeu de données de paramètres corrélés de taille et la quantité de photons incidents ou de courant appliquée à l'échantillon (22).

10. Le procédé de détermination d'un rendement quantique selon l'une quelconque des revendications précédentes, dans lequel l'échantillon est sélectionné à partir du groupe consistant en des particules uniques, préférablement des nanoparticules, plus préférablement des nanoparticules immobilisées sur un substrat ; des nanozones au sein d'un film, préférablement des films avec une épaisseur en nanomètres ; des nanozones au sein d'un dispositif, préférablement une cellule solaire ou une batterie ; des nanozones au sein d'un substrat ; et des biomolécules, préférablement des protéines.

11. Le procédé de détermination d'un rendement quantique selon l'une quelconque des revendications précédentes, dans lequel, si l'échantillon (22) est illuminé par l'unité d'excitation (32), au cours de l'étape b) l'échantillon (22) est irradié par une lumière d'illumination (26, 38) à la fois dans le canal d'illumination pour mesures de fluorescence (32) et dans le canal d'illumination pour mesures de dispersion (16), la lumière d'illumination (38) dans le canal d'illumination pour mesures de fluorescence (32) présentant une intensité inférieure comparée à la lumière d'illumination (26) dans le canal d'illumination pour mesures de dispersion (16),
en particulier, la lumière d'illumination (26) dans le canal d'illumination pour mesures de dispersion (16) étant polarisée linéairement ou polarisée circulairement, et/ou
dans lequel, si la polarisation électrique est appliquée par l'unité d'excitation (32) à l'échantillon (22), l'étape b) est exécutée avant l'étape c).

12. Le procédé de détermination d'un rendement quantique selon l'une quelconque des revendications précédentes, dans lequel aux étapes b) et c) les signaux de fluorescence et de dispersion sont enregistrés en tant que trames d'image, et/ou
dans lequel entre les étapes b) et d) ou au cours de l'étape d) le procédé inclut en outre l'étape de corrélation d'une position de chaque signal de fluorescence et d'une position de chaque signal de dispersion pour obtenir une trame d'image corrélée avec des signaux de fluorescence et de dispersion superposés.

13. Le procédé de détermination d'un rendement quantique selon la revendication 12, dans lequel le procédé inclut en outre l'étape de tri de signaux faux positifs en analysant la trame d'image corrélée avec des signaux de fluorescence et de dispersion superposés, préférablement en déterminant une distance entre des signaux de fluorescence et de dispersion superposés, dans lequel, si la distance déterminée est identifiée comme au-dessous ou au-dessus d'une valeur de seuil prédéterminée, les signaux de fluorescence et de dispersion superposés correspondant à la distance déterminée sont éliminés à l'étape d).

14. Le procédé de détermination d'un rendement quantique selon l'une quelconque des revendications précédentes, dans lequel aux étapes b) et d) le procédé inclut en outre les étapes suivantes :
e) une application d'un stimulus externe à l'échantillon (22) pour diminuer la fluorescence d'une certaine zone de l'échantillon (64),
en particulier, le procédé incluant en outre l'étape de répétition d'un cycle d'étapes b), c) et e) pour une durée prédéterminée ou jusqu'à ce qu'un nombre prédéterminé de cycles soit effectué.

15. Microscope combinant fluorescence et dispersion interférométrique (10), comprenant
une unité d'excitation (32), l'unité d'excitation (32) comprenant un canal d'illumination pour mesures de fluorescence (33) avec une deuxième source d'illumination (36), ou une alimentation (78),
un canal de détection pour mesures de fluorescence (34) et des canaux d'illumination et de détection pour mesures de dispersion (16, 18),
un support d'échantillon (20) pour maintenir un échantillon (22) dans un emplacement d'échantillon,
une première source d'illumination (24) qui est affectée au canal d'illumination pour mesures de dispersion (16) et configurée pour fournir une lumière d'illumination (26) sur le support d'échantillon (20),
une deuxième source d'illumination (36) qui est affectée à l'unité d'excitation (32) et configurée pour fournir une lumière d'illumination (38) sur le support d'échantillon (20), ou l'alimentation (78) qui est affectée à l'unité d'excitation (32) et configurée pour appliquer une polarisation électrique au support d'échantillon (20),
un premier détecteur (28) qui est affecté au canal de détection pour mesures de dispersion (18) et configuré pour recevoir une lumière de sortie (30) provenant du support d'échantillon (20), la lumière de sortie (30) comprenant à la fois une dispersion de lumière provenant de l'emplacement d'échantillon et une lumière d'illumination reflétée depuis l'emplacement d'échantillon ; et
un deuxième détecteur (44) qui est affecté au canal de détection pour mesures de fluorescence (34) et configuré pour recevoir une lumière de fluorescence (46) provenant de l'échantillon (22),
et une unité de commande et de traitement (60) qui est connectée à l'unité d'excitation (32) et au canal de détection pour mesures de fluorescence (34) et chacun des canaux d'illumination et de détection pour mesures de dispersion (16, 18),
dans lequel l'unité de commande et de traitement (60) est adaptée pour exécuter les étapes a) - d) de la revendication 1.
